(19) Europäisches Patentamt
European Patent Office
Office européen des brevets

(11) **EP 2 647 098 B1**

(12) **EUROPEAN PATENT SPECIFICATION**

(45) Date of publication and mention of the grant of the patent:
**09.08.2017 Bulletin 2017/32**

(51) Int Cl.:
*H02J 3/38* (2006.01)    *H02J 3/40* (2006.01)
*H02J 3/46* (2006.01)    *F03D 9/00* (2016.01)

(21) Application number: **11807997.9**

(22) Date of filing: **30.11.2011**

(86) International application number:
**PCT/IE2011/000063**

(87) International publication number:
**WO 2012/073228 (07.06.2012 Gazette 2012/23)**

(54) **IMPROVEMENTS IN AND RELATING TO WIND FARMS**

VERBESSERUNGEN AN UND IM ZUSAMMENHANG MIT WINDPARKS

AMÉLIORATIONS APPORTÉES À DES PARCS ÉOLIENS ET S'Y RAPPORTANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2010 IE 20100756**

(43) Date of publication of application:
**09.10.2013 Bulletin 2013/41**

(73) Proprietor: **University of Limerick**
**Limerick (IE)**

(72) Inventors:
- **TOAL, Daniel**
  **Limerick (IE)**
- **PICAN, Emmanuel**
  **County Tipperary (IE)**

- **LEAHY, Martin**
  **Limerick (IE)**

(74) Representative: **Lucey, Michael et al**
**PurdyLucey**
**Intellectual Property**
**6-7 Harcourt Terrace**
**D2 Dublin (IE)**

(56) References cited:
**EP-A1- 1 914 419**    **EP-A1- 2 375 529**
**WO-A1-00/73652**    **WO-A2-01/57396**

- **TAMRAKAR I ET AL: "Voltage and frequency control of parallel operated synchronous generator and induction generator with STATCOM in micro hydro scheme", 20070913, vol. 1, no. 5, 13 September 2007 (2007-09-13), pages 743-750, XP006029308,**

**Description**

<u>Introduction</u>

The invention relates to wind farms and other generation installations such as wave energy farms, or tidal energy farms. In this field there are prime movers such as wind turbines, and generators driven by the prime movers. These may be linked by a transmission system to a local or onshore site.

<u>Background on Generators used for Wind Turbines</u>

A synchronous generator (SG) has magnetic poles on a rotor, and as the rotor rotates it generates an AC voltage in the stator phase windings. The frequency of AC is related directly to the mechanical speed of rotation. So, for direct interconnect to the constant frequency grid the machines must run at a constant synchronous mechanical rotation speed. This is impractical to guarantee with direct interconnection to the grid in wind farms due to the wind variability. Therefore, a converter is often employed that decouples the generator from the constant frequency grid. The converter is typically located in each wind turbine offshore, one per wind turbine.

A permanent magnet synchronous generator ("PMSG") has permanent magnets on the rotor, so it needs no electrical circuits through brushes and slip-rings to the rotor. This lowers maintenance requirements.

In electrically excited synchronous generators (EESGs) the rotor magnetic poles are electromagnets and thus need current on the rotor to generate the magnetic field. It needs brushes and slip rings to supply the current to the rotor with incumbent reliability problems.

Regarding induction generators, two types are used in wind generation, doubly fed induction generator (DFIG) and squirrel cage. These are effectively rotating transformers. They need the stator field windings to be energised by the bus phases, and so they can not run as standalone machines or as the first machine connected to a power bus. With the stator windings connected to AC bus phases and the rotor rotating under mechanical shaft input from the primo mover, current is induced in the rotor. This current interacts magnetically with the stator circuit and power is transferred by current being induced back into the stator. The product of stator voltage and current multiplied by the power factor gives the electric power generated. An induction generator requires a differential speed of rotation between the electric rotation of the stator magnetic field (caused by the three phase windings) and the speed of rotation of the rotor. This is the "slip". So, there is a constant electric frequency on the stator but a different mechanical rotation speed on the rotor.

A squirrel cage induction generator has a squirrel cage conductor arrangement in the rotor and needs no slip rings. Rotor currents are induced and contained entirely in the rotor conductors. The stator current frequency generated is the frequency of the bus to which it is connected. The rotor mechanical speed can vary but the stator electric frequency is that of the bus phases the generator is connected to.

A doubly fed induction generator has a wound rotor that is fed by a partial back-to-back converter from the stator side. This arrangement allows an increase in the range of differential speeds (of slip) that the rotor/machine can generate power at, but has the failure / reliability issues related to slip rings and brushes.

<u>Problems at Remote Sites such as Offshore Wind Farms</u>

While there have been major advances in offshore wind farm technology, extreme weather events can be very destructive. Cyclones and hurricanes often challenge the offshore energy industry, exposing owners to significant capital losses. For example in 2005, only two years after being commissioned, all eighty of the Vestas V80 2 MW nacelles at Denmark's offshore Horns Rev facility had to be removed in order to carry out extensive work on the generators and transformers. In this case *in situ* repair was not possible.

The turbine nacelle is designed to protect against water ingress, however high velocity salty winds tend to find their way into electrical and instrument control systems, leading to corrosion problems. Another problem is high humidity, especially at sea. In onshore conditions natural ventilation systems provide adequate protection against condensation. However, offshore, the problem is exacerbated due to the necessary air sealing of the turbine, resulting in substantial condensation effects. This can lead to moisture-induced short circuits. The remoteness of the off shore site and need for boat or helicopter to access, results in increased costs for inspection repair and maintenance of off shore wind turbines compared to onshore.

International Patent Publication No. WO00/73652 discloses a wind power plant and a method for control.

The invention addresses these problems.

<u>Summary of the Invention</u>

According to the invention, there is provided a power generating system as set out in claim 1.

In one embodiment, the remote system comprises a step-up transformer connected between the common connection point and the transmission system, and the local delivery system comprises a step-down power transformer before the back-to-back power converter.

In one embodiment, the remote system further comprises at least one doubly fed induction generator in addition to said synchronous generators, said induction generator or generators being arranged to take frequency provided by the synchronous generators.

In one embodiment, the induction generator is of the squirrel cage type.

In one embodiment, the prime movers include turbine blades and the remote system controller is adapted to control pitch of the turbine blades.

In one embodiment, the remote system controller is adapted to dynamically connect and disconnect generators from the remote bus according to conditions to ensure voltage and frequency matching.

In one embodiment, the remote system controller is adapted to connect a first synchronous generator to the remote bus in a manner which is frequency wild within tolerance limits which are not set by grid codes, the remote bus providing a frequency wild common connection point, and to control a subsequent synchronous generator to synchronise it to the common connection point wild frequency of the remote bus, and to then connect the subsequent generator to the remote bus.

In one embodiment, the remote system controller is adapted to automatically isolate the generators from the remote bus according to power generation or maintenance requirements.

In one embodiment, at least one prime mover is a wind energy device, and/or a wave energy device, and/or a tidal energy device, and/or any one or a combination of prime movers selected from a diesel engine, a gas turbine, a fuel oil turbine or a steam turbine.

In one embodiment, the remote system is grouped into clusters of generators and with transformer and switchgear to allow these clusters of generators to be isolated from one another and the transmission system as required by power generation or maintenance requirements.

Detailed Description of the Invention

The invention will be more clearly understood from the following description of some embodiments thereof, given by way of example only with reference to the accompanying drawings in which:-

Fig. 1 is a diagram showing three offshore wind turbines and delivery of power from them to the onshore grid;

Figs. 2 is a diagram showing the generators and connection to a common connection point in more detail, with sampling points being indicated;

Figs. 3 shows plots illustrating operation of the system;

Fig. 4 is a diagram illustrating operation of a PID loop used in a controller of the system; and

Fig. 5 is a synchronisation flowchart for the system.

The invention provides a simplified remote wind turbine system for installation at remote locations, with less equipment at risk of failure in adverse conditions and some equipment relocated to more readily accessed locations. It is based on our understanding that back-to-back power converters are a major cause of the reliability problems and down-time at offshore locations.

The invention provides a power generating system which in at least some embodiments has at the remote site synchronous generators linked with the prime movers. There is no synchronisation with the grid at the remote location, only synchronisation of generators with each other when they are connected to the common connection point. Power is transferred by a transmission system to a central local site in AC form only, there being no AC-DC-AC conversion between synchronous generators and the common connection point at the remote site or in the transmission system to the local site. Avoidance of the need for AC-DC-AC converters removes the need for a considerable amount of equipment at the remote site. This is hugely advantageous for maintenance at the remote site, such as an offshore wind farm.

Compliance with grid codes (relating to parameters such as: voltage tolerance, frequency tolerance, and reactive power stipulations) is only performed at the local site, such as at the landfall point of interconnection to the grid, where back-to-back converters are located to realise the compliance. The back-to-back converters (AC-DC-AC) convert the non-compliant, frequency wild, power on the wind farm side to compliant power on the grid side. They thus decouple the wind farm from the grid. Everything offshore can thus be non-compliant frequency wild and simplified to remove high failure rate components such as back-to-back converters.

At the remote site more than one synchronous generator are preferably interconnected to each other and there are components to synchronise their frequency. Once synchronised, the synchronous generators are frequency locked together. However, the group of remote synchronous generators can vary in frequency together ("frequency wild") and need not be synchronised with the grid. As wind speed varies - the speed of the turbines can vary. A typical offshore wind farm will likely have 10 to 100 or more turbine units.

The frequency wild offshore installations could be as simple as a single generator (PMSG or EESG) operated frequency wild and connected through a transmission cable to a power converter at landfall. In this instance the offshore installation is again non compliant to grid. This is unlikely in offshore wind as, for economy of scale reasons, farms usually include multiple turbines and generators.

While it is not a preferred embodiment, once synchronous generators are connected first to the common connection point (remote power bus), turbines with induction generators (squirrel cage or DFIG) could be subsequently added. Operators are more likely to restrict an offshore wind farm to use of a single generator type or technology; however mixed generator types are possible. The synchronous generators must be connected first to the common connection point and subsequently-connected induction generators will take their frequency from the frequency wild common connection point or power bus. The mix and ratio of induction to synchronous machines will be dependent on the stiffness requirements of operation of the offshore power system as determined by the operator.

In the invention there is direct connection/interconnection without power converters of one or more frequency wild synchronous generators to a common connection point (remote power bus) off shore, with possible subsequent connection of induction generators to the same common connection point. There is a transmission system feeding this power through cable to the onshore local site. Grid compliance is realised at this onshore converter grid connection point. The onshore installation does need a back-to-back converter rated for the total generation capacity of the offshore farm so that all delivered power is converted to compliant power. The onshore power converter may include parallel redundancy.

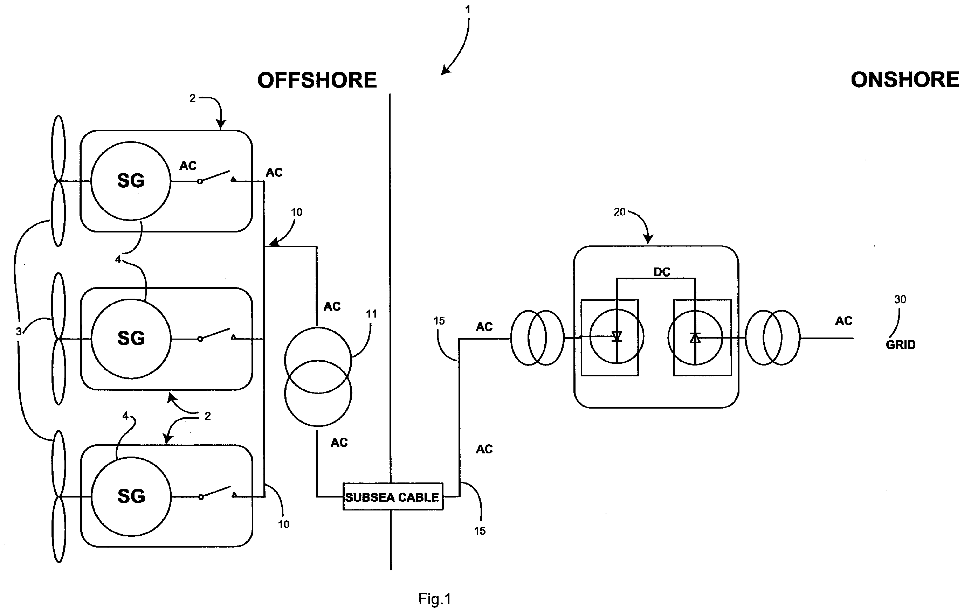

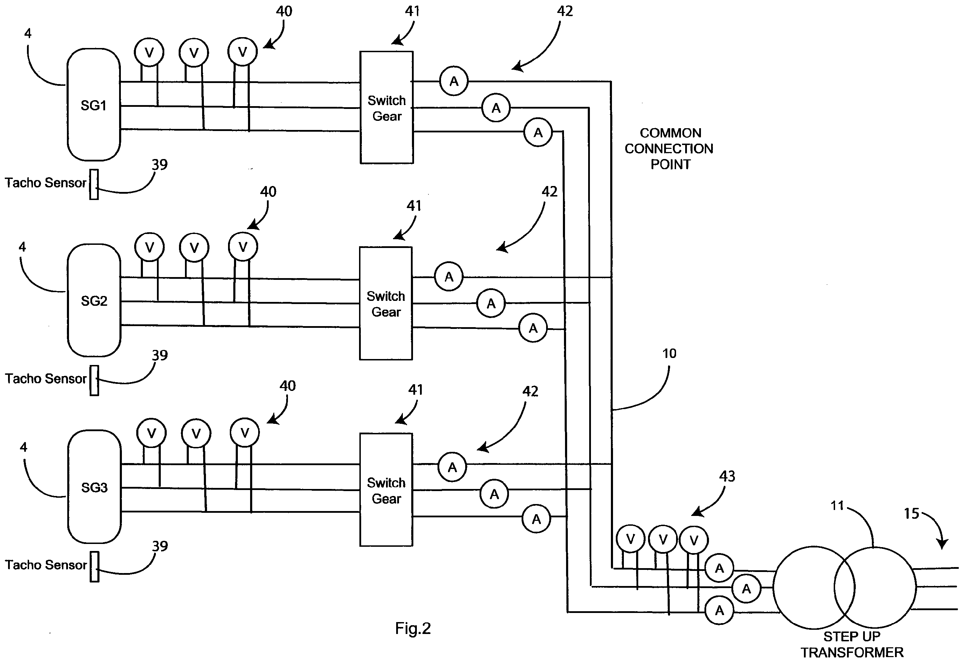

Referring to Figs. 1 and 2 a power generating system 1 comprises in this embodiment three wind turbine systems 2 at a remote site. Each wind turbine system 2 has blades 3, a permanent magnet synchronous generator (SG) 4, and a controller to manage delivery of power to the remote bus 10 which is a common connection point at the offshore location. A single transformer 11 is physically located in one of the turbine towers and receives power from the turbine on that tower and the other turbine systems 2 via links 10. An alternative is for the transformer to be located separately, for example attached externally to one tower or on the seabed or on a separate platform, allowing all turbine systems and towers to be the same. The transformer 11 steps up the voltage and delivers the power onto a transmission system (sub-sea cable) 15 linking the remote site to the local site. The transmission system delivers the total power in AC to the power converter 20 at the local, onshore, site.

Referring to Fig. 2 in particular, this shows the remote part of the system. The SGs 4 may be driven with or without a gearbox by the prime mover, in this case a wind turbine (one turbine per generator). There are tachometric sensors 39 measuring rotational speeds of the generators. There are generator-side voltage measurement probes 40, before medium voltage switch gear 41 at the output of each SG 4. Probes 42 downstream of the switch gear 41 measure generator current as it is fed onto the common connection point or remote bus 10. There is comprehensive current and voltage measurement of all three phases by probes 43 on the common connection point. Finally, there is a step-up transformer 11 feeding a sub-sea cable 15, to provide the transmission system.

The invention avoids the need for each turbine to have a converter for AC-DC-AC conversion to achieve grid compliance, such conversion being carried out at a single point on land prior to grid connection.

The power generated by the wind turbine systems 2 does not need to comply with the grid code requirements. Referring to Fig. 2 each SG 4 delivers power to the common connection point 10 via three-phase contactors. The power generated does not have to be filtered or "cleaned". The only requirement to allow a turbine to distribute to the common connection point 10 is that it must have the same voltage and frequency as the common connection point 10.

Synchronisation of synchronous generators at the remote site involves connecting each 3-phase generator in a procedure in which the following conditions must be met:

- Frequency: the generator's speed of rotation must be increased (or reduced if over speed) until the generated electrical frequency is equal to the frequency at the common connection point 10.
- Voltage: the generator's line voltage is within a defined tolerance relative to the common connection point line voltage.
- Phase Sequence: the phase sequence of the generators 4 is the same as the phase sequence of the common connection point (and the other connected generators)
- Phase Angle: the phase angles of the generators 4 are within a defined tolerance of the phase angles at the common connection point to which they are to be connected.

In an experimental setup, synchronisation and data acquisition is done with LabVIEW™ and a powerful real time controller Compact RIO from National Instruments™. This embodiment is described below, however there are many other possible controller alternatives to embody the invention.

Fig. 2 shows the positions of the measurement points within the turbine systems and the common connection point. Voltage and current are monitored on each SG 4 output and on the common connection point 10. Generator RPM is monitored, displayed and fed back for the speed control PID loops. The PID set points are calculated by an algorithm programmed in LabVIEW™. In the case of the bench experimental rig, the PID controller outputs drive an induction motor via a variable frequency drive to simulate variations in turbine shaft power resulting from changes in wind and blade pitch control. On the real wind turbine generator, controller output varies blade pitch to control shaft power/speed.

Once any first-connected synchronous generator 4 is closed to the common connection point 10, the common connection point voltage and frequency become the reference for any other generator to be subsequently connected.

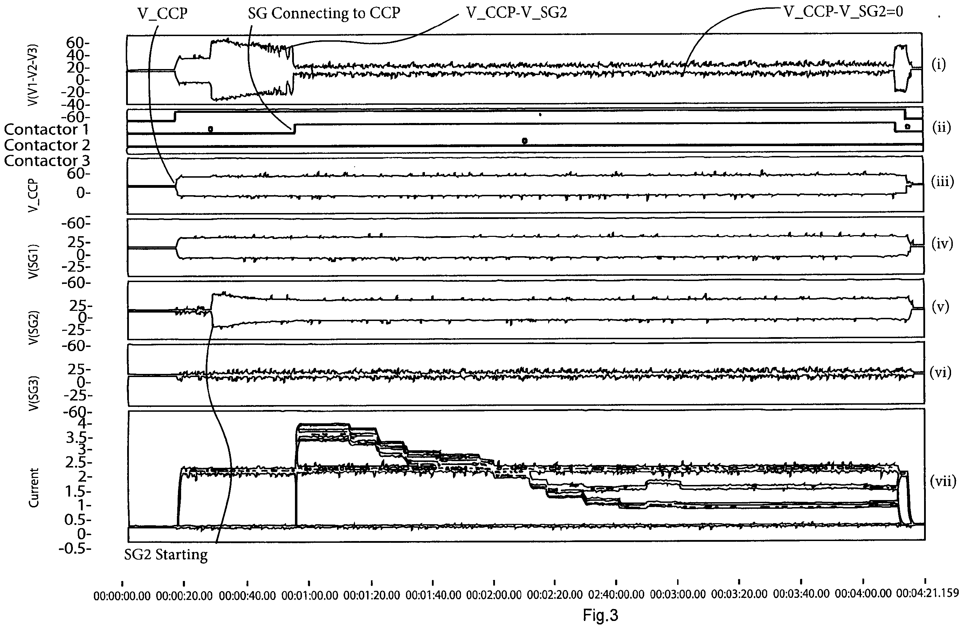

In order to achieve synchronisation, the switching of a new synchronous generator onto the common connection point 10 has to happen when voltages and frequencies (over 3 phase) match. The method compares the common connection point voltage and the new generator voltages (e.g. SG2 in Fig. 2). When the difference between common connection point and SG2 voltages are (and remain) zero, it means that the voltage and frequency are identical (Figs. 3).

The following describes what is illustrated by the plots (i) to (vii) of Fig. 3.

(i) Represents the difference between the Common Connection Point Voltage (V_CCP) and the voltage of each generator (V_SG1 & V_SG2 & V_SG3). Can be expressed with the following equation:

$$V_{Trace\_1} = ((V_{CCP} - V_{SG1}) + (V_{CCP} - V_{SG2}) + (V_{CCP} - V_{SG3}))$$

At Time = 00:00:55:00, SG1 & SG2 are synchronised to the CCP (SG3 did not start in this experiment), therefore V_CCP = V_SG1 = V_SG2 and consequently V_Trace_1 is nearly zero.

(ii) Represents the digital signal feeding the medium voltage switch gear, ie: when the signal is equal 1, the switch gear closes. (eg: Time = 00:00:55:00 switch gear of SG2 closes).

(iii) Represents V_CCP, the voltage of the CCP (when SG1 is synchronised to the CCP (Time: 00:00:19:00) V_CCP is approx: 40 VAC).

(iv) Represents V_SG1, the voltage output of generator 1.

(v) Represents V_SG2, the voltage output of generator 2.

(vi) Represents V_SG3, the voltage output of generator 3.

(vii) Represents the current out of SG1, SG2, SG3 and the overall current of the CCP. The horizontal trace represents the overall current in the CCP, it is constant as it is related to the fix load, at Time: 00:00:55:00, when PMG2 is synchronised, there is a transient were currents are flowing from and to generators and to the CCP, this state of transient is acceptable during synchronisation (up to 6 seconds), one of the control algorithm tasks is to manage the transient and balance the currents in order to avoid circulating currents (reverse power). The over current witnessed just after Time: 00:00:55:00 is reducing until balance is achieved (see trace).

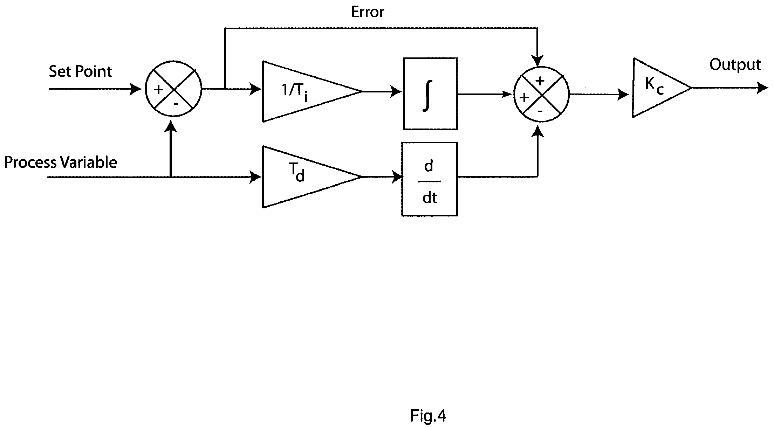

The synchronisation is done by the controller via PID loops (Fig. 4). This is realised by manipulating the rotation speed of SG2. Control strategies other than PID may be employed.

In a wind farm there is scope for control using blade angle adjustment. Rotation of the entire wind turbine can also affect speed of rotation change. Blade angle adjustment and turbine rotation are also known as "pitch" and "yaw" control, respectively.

The purpose of pitch control is to adjust blade angle to achieve target rotor speeds and power output. Pitch adjustment can be used to change the angle of attack of the turbine blades. Increasing the angle of attack causes the flat side of the blade to face further into the wind. Reducing the angle of attack causes the edge of the blade to turn towards the oncoming wind. Pitch angle adjustment is the most effective way to control output power by changing aerodynamic force on the blade with varying wind speeds.

Once the synchronisation conditions are realised, and the controller has confirmed a 0 Volt difference between the common connection point and the potential feeder, the controller outputs to the 3-phase switchgear contactor to connect the generator to the common connection point.

After a generator is synchronised and connected, pitch control can be adjusted to allow delivery of power to the remote bus 10. Voltages, currents, and frequencies are monitored constantly for each generator. Thus, fault protection is realised and a generator 4 can be disconnected as needed for several reasons: protection against over-current, under-voltage, earth leakage, or short circuit currents being prime examples. Thermal and mechanical faults are similarly monitored for and protected against.

Before the first SG 4 is connected to the common connection point, it is brought up to nominal frequency and voltage. Once the first SG is connected, subsequent SGs to be connected must be synchronised as described above.

The remote system controller is adapted to connect a first synchronous generator to the remote bus in a manner which is frequency wild within tolerance limits which are not set by grid codes, the remote bus providing a frequency wild common connection point. Also, the controller controls a subsequent synchronous generator to synchronise it to the common connection point wild frequency of the remote bus, and then connects the subsequent generator to the remote bus. This is repeated for each subsequent synchronous generator.

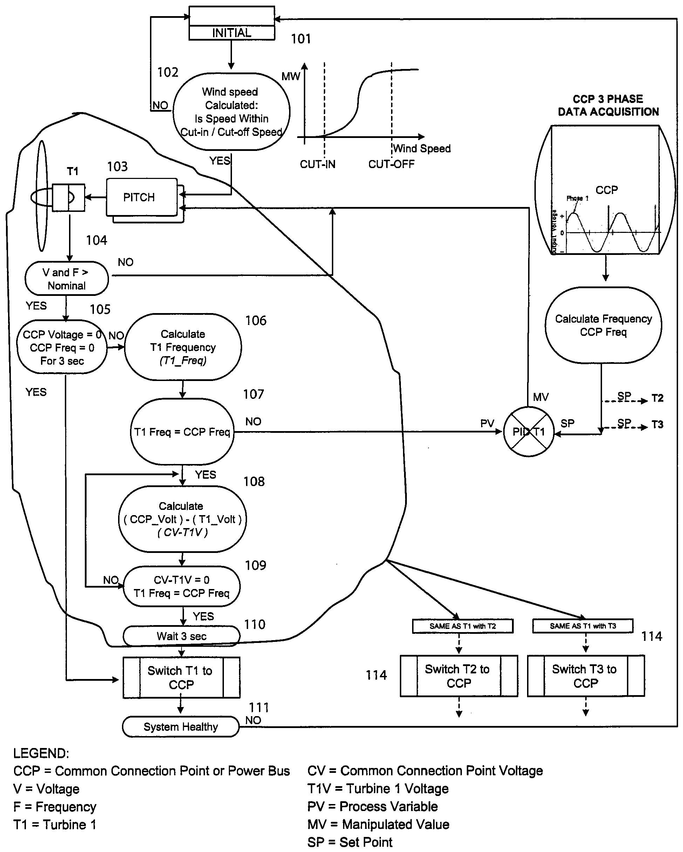

The flowchart on Fig. 5 shows the sequence of events during the start and connection of a turbine to the common connection point. Only one turbine can be added at a time, and therefore these sequences are interlocked. The following describes the steps in detail.

101. Initial step, system resting (T1) awaiting for step 2 to be true.

102. Anemometer measures wind speed, if wind speed is below Cut-Off speed (high wind speed can damage turbine) and if wind speed is over Cut-In speed (low wind speed does not have enough energy to produce a meaningful power output) then, pitch is altered in order to enable rotation of T1.

103. Pitch is controlled.

104. T1 is generating voltage (V) at a frequency (F), if V or F is below nominal accepted value, this close loop controls the angle of the blade in order to achieve an ideal pitch.

105. If V & F are within nominal value, CCP_Voltage & Bus Freq is measured and compared to zero (dead CCP). If CCP_Voltage & Bus_Freq is null for at least 3 seconds then T1 is connected to the CCP (Go To Step 10). If Bus_Voltage or CCP_Freq are not null then Go To Step 6.

106. Calculate T1 Frequency (T1_Freq) from tacho sensors.

107. Is T1_Freq = CCP_Freq? -If not, alter pitch via the PID controller. -If yes, Go To Step 8.

108. Calculate the voltage difference between CCP_Volt and T1_Volt.

109. If CV-T1V is equal zero for 3 seconds then Go To Step 10. If CV-T1V is NOT equal zero (means that either: CCP_Voltage and T1_Voltage are different or, CCP_Voltage and T1_Voltage are identical, but, the phase angle between each other is over of below 0° +/- phase angle synchronisation tolerance). In this condition the system awaits until CV-T1V equal zero.

110. T1 can be connected to the CCP.

111. System healthy, maximum power tracking is controlling the pitch in order to supply load efficiently.

112. PID control.

113. Bus frequency measurements.

114. Repeat same procedure used by T1 for T2 and T3 and Tn.

It will be appreciated that the invention enables certain system components to be removed from each individual generator and combined for multiple generators at more readily serviceable locations. The invention also obviates the requirement for other system components generally included in each wind generator tower or other form of generator.

The invention is not limited to the embodiment described above for wind farms with SGs but may be varied in implementation detail to other energy farm configurations with synchronous or a mix of synchronous and induction generators. Also, the prime mover may be of any other type such as any or a combination of wind turbines, wave energy converters, hydro turbines, or diesel engines. The synchronous generators may be of the electrically excited type (EESG) or the permanent magnet type (PMSG). Also, it is envisaged that the power may be transferred back to the local delivery system with out step-up or step-down transforming. This may be the case for example where the generators provide a high voltage directly.

**Claims**

1. A power generating system comprising:

   a local delivery system adapted to be connected to an electric power grid;
   a remote system having at least one synchronous generator (4) driven by a prime mover, (3) a remote bus (10) to which the synchronous generator is linked, and a controller;
   a transmission system (15) linking the remote system to the local delivery system, wherein the remote system and the transmission system are adapted to deliver AC power, and the local delivery system comprises a back-to-back converter (20) to perform AC-DC-AC conversion for grid code compliance,
   wherein the remote system does not have AC-DC-AC conversion,
   **characterised in that**:

   the remote system comprises at least two prime movers, a synchronous generator coupled to each prime mover, and said synchronous generators are connected to the remote bus so that the remote bus provides a common connection point, and
the remote system controller is adapted to match voltage and frequency of power delivered from all of the synchronous generators to the remote power bus for synchronisation of the synchronous generators in a manner which is frequency wild.

2. A power generating system as claimed in claim 1, wherein the remote system comprises a step-up transformer connected between the common connection point and the transmission system, and the local delivery system comprises a step-down power transformer before the back-to-back power converter.

3. A power generating system as claimed in either of claims 1 or 2, wherein the remote system further comprises at least one doubly fed induction generator in addition to said synchronous generators, said induction generator or generators being arranged to take frequency provided by the synchronous generators.

4. A power generating system as claimed in claim 3, wherein the induction generator is of the squirrel cage type.

5. A power generating system as claimed in any of claims 1 to 4, wherein the prime movers include turbine blades and the remote system controller is adapted to control pitch of the turbine blades.

6. A power generating system as claimed in any preceding claim, wherein the remote system controller is adapted to dynamically connect and disconnect generators from the remote bus according to conditions to ensure voltage and frequency matching.

7. A power generating system as claimed in any preceding claim, wherein the remote system controller is adapted to connect a first synchronous generator to the remote bus in a manner which is frequency wild within tolerance limits which are not set by grid codes, the remote bus providing a frequency wild common connection point, and to control a subsequent synchronous generator to synchronise it to the common connection point wild frequency of the remote bus, and to then connect the subsequent generator to the remote bus.

8. A power generating system as claimed in any preceding claim, wherein the remote system controller is adapted to automatically isolate the generators from the remote bus according to power generation or maintenance requirements.

9. A power generating system as claimed in any preceding claim, wherein at least one prime mover is a wind energy device.

10. A power generating system as claimed in any preceding claim, wherein at least one prime mover is a wave energy device.

11. A power generating system as claimed in any preceding claim, wherein at least one prime mover is a tidal energy device.

12. A power generating system as claimed in any preceding claim, wherein at least one prime mover is any one or a combination of prime movers selected from a diesel engine, a gas turbine, a fuel oil turbine or a steam turbine.

13. A power generating system as claimed in any preceding claim, wherein the remote system is grouped into clusters of generators and with transformer and switchgear to allow these clusters of generators to be isolated from one another and the transmission system as required by power generation or maintenance requirements.

**Patentansprüche**

1. Leistungserzeugungssystem, das Folgendes umfasst:

ein örtliches Zufuhrsystem, das dazu angepasst ist, an ein elektrisches Leistungsnetz angeschlossen zu werden;
ein entferntes System mit mindestens einem Synchrongenerator (4), der von einer Antriebsmaschine (3) angetrieben wird, einem entfernten Bus (10), mit dem der Synchrongenerator verbunden ist und einem Kontroller;
ein Übertragungssystem (15), das das entfernte System mit dem örtlichen Zufuhrsystem verbindet, wobei das entfernte System und das Übertragungssystem dazu angepasst sind, Wechselstromleistung zuzuführen und das örtliche Zufuhrsystem einen Back-to-Back-Wandler (20) umfasst, um Wechselstrom-Gleichstrom-Wechselstrom-Wandlung zur Einhaltung der Netzzugangsbedingungen (Grid Codes) auszuführen, wobei das entfernte System keine Wechselstrom-Gleichstrom-Wechselstrom-Wandlung aufweist, **dadurch gekennzeichnet, dass**:

das entfernte System mindestens zwei Antriebsmaschinen umfasst, wobei ein Synchrongenerator an jede Antriebsmaschine gekoppelt ist und die Synchrongeneratoren an den entfernten Bus angeschlossen sind, sodass der entfernte Bus eine gemeinsame Anschlussstelle bereitstellt, und

der Kontroller des entfernten Systems dazu angepasst ist, Spannung und Frequenz der von allen Synchrongeneratoren zugeführten Leistung mit dem entfernten Leistungsbus abzugleichen, um die Synchrongeneratoren auf frequenzwilde Art und Weise zu synchronisieren.

2. Leistungserzeugungssystem nach Anspruch 1, wobei das entfernte System einen Aufwärtstransformator umfasst, der zwischen der gemeinsamen Anschlussstelle und dem Übertragungssystem angeschlossen ist, und das örtliche Zufuhrsystem einen Abwärtsleistungstransformator vor dem Back-to-Back-Leistungswandler umfasst.

3. Leistungserzeugungssystem nach einem der Ansprüche 1 und 2, wobei das entfernte System weiter mindestens einen doppelt gespeisten Induktionsgenerator zusätzlich zu den Synchrongeneratoren umfasst, wobei der bzw. die Induktionsgenerator(en) dazu angeordnet ist bzw. sind, von den Synchrongeneratoren bereitgestellte Frequenz aufzunehmen.

4. Leistungserzeugungssystem nach Anspruch 3, wobei der Induktionsgenerator vom Typ Käfigläufer ist.

5. Leistungserzeugungssystem nach einem der Ansprüche 1 bis 4, wobei die Antriebsmaschinen Turbinenschaufeln umfassen und der Kontroller des entfernten Systems dazu angepasst ist, den Winkel der Turbinenschaufeln zu steuern.

6. Leistungserzeugungssystem nach einem der vorangehenden Ansprüche, wobei der Kontroller des entfernten Systems dazu angepasst ist, Generatoren gemäß den Bedingungen dynamisch an den entfernten Bus anzuschließen und davon zu trennen, um den Spannungs- und Frequenzabgleich sicherzustellen.

7. Leistungserzeugungssystem nach einem der vorangehenden Ansprüche, wobei der Kontroller des entfernten Systems dazu angepasst ist, einen ersten Synchrongenerator auf innerhalb nicht von Netzzugangsbedingungen eingestellten Toleranzen frequenzwilde Art und Weise an den entfernten Bus anzuschließen, wobei der entfernte Bus eine frequenzwilde gemeinsame Anschlussstelle bereitstellt, und einen anschließenden Synchrongenerator zu steuern, um ihn mit der wilden Frequenz an der gemeinsamen Anschlussstelle des entfernten Busses zu synchronisieren und dann den anschließenden Generator an den entfernten Bus anzuschließen.

8. Leistungserzeugungssystem nach einem der vorangehenden Ansprüche, wobei der Kontroller des entfernten Systems dazu angepasst ist, die Generatoren gemäß Leistungserzeugungs- oder Wartungsanforderungen automatisch vom entfernten Bus zu isolieren.

9. Leistungserzeugungssystem nach einem der vorangehenden Ansprüche, wobei es sich bei mindestens einer Antriebsmaschine um eine Windenergievorrichtung handelt.

10. Leistungserzeugungssystem nach einem der vorangehenden Ansprüche, wobei es sich bei mindestens einer Antriebsmaschine um eine Wellenenergievorrichtung handelt.

11. Leistungserzeugungssystem nach einem der vorangehenden Ansprüche, wobei es sich bei mindestens einer Antriebsmaschine um eine Gezeitenenergievorrichtung handelt.

12. Leistungserzeugungssystem nach einem der vorangehenden Ansprüche, wobei es sich bei mindestens einer Antriebsmaschine um eine oder eine Kombination von Antriebsmaschinen handelt, die aus einem Dieselmotor, einer Gasturbine, einer Schwerölturbine und einer Dampfturbine ausgewählt wird.

13. Leistungserzeugungssystem nach einem der vorangehenden Ansprüche, wobei das entfernte System zu Gruppen von Generatoren gruppiert ist und mit Transformatoren und Schalteinrichtungen, um zu ermöglichen, dass diese Gruppen von Generatoren, wie von den Leistungserzeugungs- oder Wartungsanforderungen verlangt, voneinander und dem Übertragungssystem isoliert werden.

**Revendications**

1.  Un système de génération d'énergie comprenant :

    un système de distribution local apte à être raccordé à un réseau d'énergie électrique ;
    un système distant doté d'au moins un générateur synchrone (4) entraîné par un élément moteur (3), un bus distant (10) auquel le générateur synchrone est relié, et un dispositif de commande ;
    un système de transmission (15) reliant le système distant au système de distribution local, le système distant et le système de transmission étant aptes à distribuer du courant CA, et le système de distribution local comprenant un convertisseur dos à dos (20) pour réaliser la conversion CA-CC-CA pour la conformité au code du réseau,
    le système distant n'ayant pas de conversion CA-CC-CA,

    **caractérisé en ce que** :

    le système distant comprend au moins deux éléments moteurs, un générateur synchrone couplé à chaque élément moteur, et lesdits générateurs synchrones sont raccordés au bus distant de manière à ce que le bus distant fournisse un point de connexion commun, et
    le dispositif de commande du système distant est apte à faire correspondre la tension et la fréquence du courant distribué à partir de tous les générateurs synchrones jusqu'au bus de puissance distant en vue de la synchronisation des générateurs synchrones d'une manière qui est à fréquence variable.

2.  Un système de génération d'énergie selon la revendication 1, le système distant comprenant un transformateur élévateur connecté entre le point de connexion commun et le système de transmission, et le système de distribution local comprenant un transformateur d'énergie abaisseur avant le convertisseur d'énergie dos à dos.

3.  Un système de génération d'énergie selon la revendication 1 ou 2, le système distant comprenant en outre au moins un générateur asynchrone à double alimentation en plus desdits générateurs synchrones, le ou lesdits générateurs asynchrones étant disposés de manière à prendre de la fréquence fournie par les générateurs synchrones.

4.  Un système de génération d'énergie selon la revendication 3, le générateur asynchrone étant du type à cage d'écureuil.

5.  Un système de génération d'énergie selon l'une quelconque des revendications 1 à 4, les éléments moteurs comprenant des pales de turbine et le dispositif de commande du système distant étant apte à commander le pas des pales de turbine.

6.  Un système de génération d'énergie selon l'une quelconque des revendications précédentes, le dispositif de commande du système distant étant apte à connecter et déconnecter de manière dynamique les générateurs du bus distant en fonction des conditions pour assurer la mise en correspondance de la tension et de la fréquence.

7.  Un système de génération d'énergie selon l'une quelconque des revendications précédentes, le dispositif de commande du système distant étant apte à connecter un premier générateur synchrone au bus distant d'une manière qui est à fréquence variable à l'intérieur de limites de tolérance qui ne sont pas fixées par des codes du réseau, le bus distant fournissant un point de connexion commun à fréquence variable, et à commander un générateur synchrone suivant pour le synchroniser avec la fréquence variable du point de connexion commun du bus distant, et pour ensuite connecter le générateur suivant au bus distant.

8.  Un système de génération d'énergie selon l'une quelconque des revendications précédentes, le dispositif de commande du système distant étant apte à isoler automatiquement les générateurs du bus distant en fonction des exigences de génération d'énergie ou de maintenance.

9.  Un système de génération d'énergie selon l'une quelconque des revendications précédentes, au moins un élément moteur étant un dispositif à énergie éolienne.

**10.** Un système de génération d'énergie selon l'une quelconque des revendications précédentes, au moins un élément moteur étant un dispositif à énergie houlomotrice.

**11.** Un système de génération d'énergie selon l'une quelconque des revendications précédentes, au moins un élément moteur étant un dispositif à énergie marémotrice.

**12.** Un système de génération d'énergie selon l'une quelconque des revendications précédentes, au moins un élément moteur étant un quelconque ou une combinaison d'éléments moteurs sélectionnés parmi un moteur diesel, une turbine à gaz, une turbine au fuel, ou une turbine à vapeur.

**13.** Un système de génération d'énergie selon l'une quelconque des revendications précédentes, le système distant étant groupé en groupements de générateurs et avec un transformateur et un appareillage électrique pour permettre à ces groupements de générateurs d'être isolés les uns des autres et le système de transmission comme requis par les exigences de génération d'énergie et de maintenance.

OFFSHORE

ONSHORE

EP 2 647 098 B1

Fig.1

Fig.2

Fig.3

13

Fig.4

14

LEGEND:
CCP = Common Connection Point or Power Bus    CV = Common Connection Point Voltage
V = Voltage                                                              T1V = Turbine 1 Voltage
F = Frequency                                                        PV = Process Variable
T1 = Turbine 1                                                       MV = Manipulated Value
                                                                              SP = Set Point

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0073652 A